# EUROPEAN PATENT APPLICATION

(11) **EP 1 398 941 A2**
(43) Date of publication of application: **17.03.2004**
(21) Application number: 03011435.9
(22) Date of filing: 20.05.2003
(51) Int. Cl.: H04M 1/725

(54) **Mobile station for enabling automatic change in multimedia and voice call origination, and mobile communication system and method thereof**

(30) Priority: 14.09.2002 KR 2002055960
(71) Applicant: SAMSUNG ELECTRONICS CO., LTD., Suwon-City, Kyungki-do (KR)
(72) Inventor: Kwon, Do-Hun, Suwon-City, Kyungki-do (KR)
(74) Representative: Grünecker, Kinkeldey, Stockmair & Schwanhäusser Anwaltssozietät

(57) **Abstract**

Disclosed is a mobile station capable of originating at least two types of calls, which originates a first type of call, and at failure of the first call, automatically selects and originates a second type of call which was not previously attempted, and a mobile communication system and a mobile communication method using the same. The mobile station comprises: a user interface unit for enabling a user to selectively attempt one of a multimedia call and a voice call; and a control unit for controlling a first call selected by the user to be executed, determining whether the first call selected by the user succeeded or failed, and upon determining failure of the first call, controlling a second call, which was not previously attempted, to be selected and attempted.

## Description

### BACKGROUND OF THE INVENTION

### 1. Field of the Invention

The present invention relates to multimedia call origination in a mobile station, and more particularly, to a mobile station which originates a first call of voice and multimedia calls, and at failure of the first call, automatically selects and originates a second type of call that has not previously been attempted, and a mobile communication system and a mobile communication method using the same.

### 2. Description of the Related Art

Recently, mobile stations, each of which has an interactive multimedia call function in addition to a simple voice call function, are being commercialized. In addition to basic voice conversation, this allows visual communication between mobile stations, which support voice and dynamic images, via Voice over Internet Protocol (VoIP), simple Internet protocol and two-way video protocol (H.323, H.324m, SiP and so on).

In general, when a call connection is not established owing to a network condition or any other reasons, the user of the mobile station manually retries call origination. For example, a user of a general mobile station (having a voice call function) tries voice call origination again when a previous voice call is not connected. Also, when a multimedia call is not connected, a multimedia station user retries multimedia call origination. When the voice or multimedia call is not connected as above, it is troublesome and inconvenient, from the viewpoint of the user, to manually perform a call originating process again through his/her intention.

### SUMMARY OF THE INVENTION

The present invention has been made to solve the foregoing problems and it is therefore an object of the present invention to provide a mobile station capable of originating at least two types of calls, which originates a first type of call, and at failure of the first call, automatically selects and originates a second type of call which was not previously attempted, and a mobile communication system and a mobile communication method using the same.

According to an aspect of the invention for achieving the above object, a mobile station comprises: a user interface unit for enabling a user to selectively attempt one of a multimedia call and a voice call; and a control unit for controlling a first call selected by the user to be executed, determining whether the first call selected by the user succeeded or failed, and upon detecting failure of the first call, controlling a second call, which was not previously attempted, to be selected and attempted.

According to another aspect of the invention for achieving the above object, a mobile communication system is provided which includes a mobile station for supporting multimedia and voice conversation. The mobile communication system comprises: a visual communication control server for executing multimedia subscriber registration and Internet protocol allocation at the power-on registration of the mobile station, in response to a multimedia call origination request from the mobile station, determining whether a called mobile station can execute conversation, and connecting a multimedia call or informing of a failure of the multimedia call to the mobile station; and a base station for determining whether the called mobile station can execute voice conversation in response to a voice call origination request from the mobile station, and informing the mobile station of the determination result, whereby upon detection of the failure of the multimedia call after the mobile station requests multimedia call origination from the visual communication control server, the voice call is originated, upon detection of the failure of the voice call after the mobile station requests voice call origination from the visual communication control server, and the multimedia call is originated.

According to yet another aspect of the invention for achieving the above object, there is provided a multimedia or voice call originating method in a mobile station which can originate both multimedia and voice calls, the method comprising the steps of: attempting to originate one type of a multimedia call and a voice call, as selected by a user; determining whether the call origination step has succeeded; and if a failure is detected in the determination step, automatically attempting to originate the other kind of the multimedia call and the voice call, a kind which was not attempted in the call origination step.

### BRIEF DESCRIPTION OF THE DRAWINGS

The above and other objects, features and other advantages of the present invention will be more clearly understood from the following detailed description taken in conjunction with the accompanying drawings, in which:
Fig. 1A is a block diagram illustrating a first structure of a mobile communication system for high speed data transmission of the invention;
Fig. 1B is a block diagram illustrating a second structure of a mobile communication system for high speed data transmission of the invention;
Fig. 2 is a flowchart illustrating a registration process of a multimedia subscription performed by a mobile station according to an embodiment of the invention;
Fig. 3 is a flowchart illustrating a process of originating multimedia and voice calls according to a preferred embodiment of the invention;
Fig. 4 is a flowchart illustrating a process of originating multimedia and voice calls according to an alternative embodiment of the invention;
Fig. 5 is a flowchart illustrating a process of originating multimedia and voice calls according to another alternative embodiment of the invention;
Fig. 6 is a flowchart illustrating a process of originating multimedia and voice calls according to yet another alternative embodiment of the invention; and
Fig. 7 illustrates a structure of a mobile station including a keypad according to an embodiment of the invention.

### DETAILED DESCRIPTION OF THE PREFERRED EMBODIMENT

The following detailed description will present a preferred embodiment of the invention in reference to the accompanying drawings, in which well-known functions or constructions will not be described in detail since they would unnecessarily obscure the understanding of the invention.

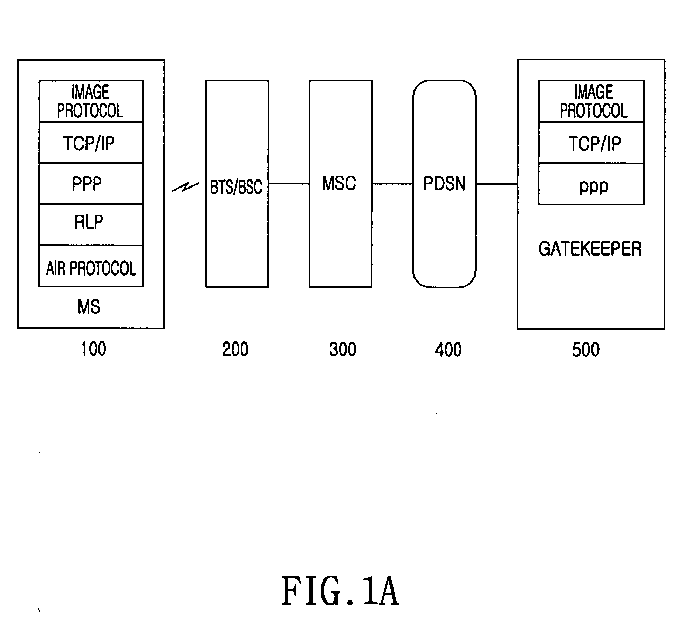

Fig. 1A is a block diagram illustrating a first structure of a mobile communication system for high speed data transmission of the invention.

No other user (caller or called side) is regarded in the system of Fig. 1A, in which the basic structure of the system is expressed regarding a mobile station (MS) in a mobile communication system for high speed data transmission since the MS can be either a caller or a called side. MS 100 can be, for example, a portable telephone or Personal Digital Assistant (PDA). The MS 100 capable of originating both multimedia and voice calls has software such as image protocol, Transmission Control Protocol/Internet Protocol (TCP/IP), Point-to-Point Protocol (PPP), Radio Link Protocol (RLP) and air protocol.

A Base-station Transceiver Subsystem (BTS)/Base Station Controller (BSC) 200 commonly designates a BTS and a BSC for the sake of convenience. The BTS serves to link between mobile stations and a switching center in a mobile communication network, and functions to perform wireless access with the mobile station, maintain synchronization and allocate/de-allocate a traffic channel. The BSC is positioned between the switching center and base stations, and performs various functions such as base station operation, management of hardware and software service state in the base station, allocation and construction of sources regarding call traffic, collection of information related to base station operation and monitoring of base station operation and sub-equipment related to detected failure. The BSC also allows handoff between the base stations in an equal BSC coverage.

A Mobile Switching Center (MSC) 300 serves to link between Public Switched Telephone Network (PSTN) and the mobile communication network. The MSC 300 is located in the center of the mobile communication network to match with the BTS/BSC 200, a Home Location Register (not shown) and so on, thereby functioning to establish a voice or non-voice speech path as well as to perform switching center operation and maintenance.

A Packet Data Serving Node (PDSN) 400 functions to provide data service of the mobile communication network. Currently, the PDSN is essential to a Code Division Multiple Access (CDMA) network for providing a super high wireless Internet service such as 2-generation wireless service, 2.5-generation wireless service or International Mobile Telecommunication-2000 (IMT-2000).

A gatekeeper 500 is connected to the PDSN 400, and operates as a server for controlling visual communication. Where a network is comprised of MoIP ( Multimedia over Internet Protocol) stations for example, the gatekeeper 500 provides various functions including address conversion (telephone number into/from IP address), address management, registration and authentication of stations and initialization of conversation between stations, bandwidth adjustment during conversation and notification of status information of a conversation counterpart.

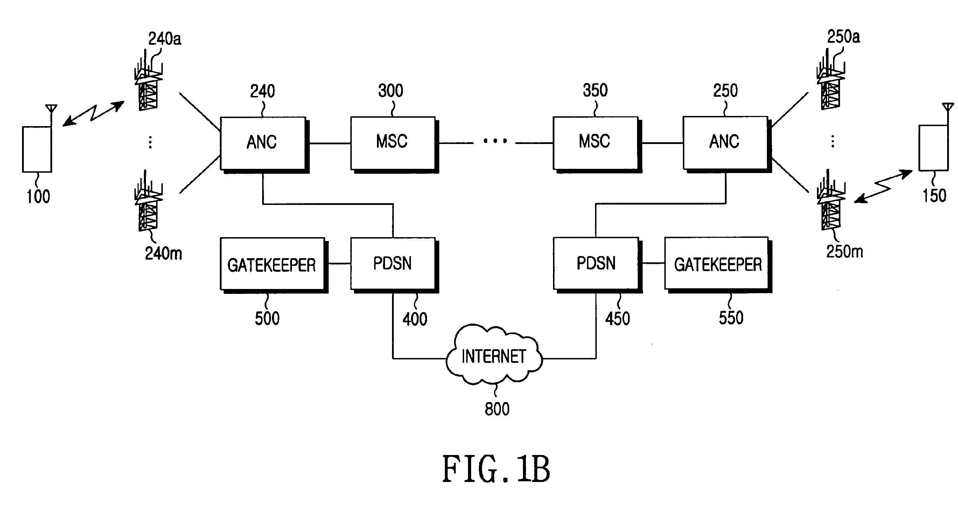

Fig. 1B is a block diagram illustrating a second structure of a mobile communication system for high speed data transmission of the invention.

The mobile communication system in Fig. 1B is a CDMA2000 1x EV-DO (Evolution-Data Only) mobile communication system in which a first mobile station resides in a first mobile communication network while a second mobile station resides in a second mobile communication network.

Since the CDMA2000 1x EV-DO standard names MS as Access Terminal (AT), BTS as Access Network System (ANTS), and BSC as Access Network Controller (ANC), hereinafter these terms will be used according to the CDMA2000 1x EV-DO standards. However, the term MS may be used while including the AT.

Fig. 1B assumes that the AT 100 as the first mobile station is in wireless access to an ANTS 240a of ANTS 240a to 240m in the first mobile communication network and the AT 150 as the second mobile station is in wireless access to an ANTS 250m of ANTS 250a to 250m in the second mobile communication network. Also, in this embodiment, the AT 100 functions as a caller and the AT 150 functions as a called side.

The construction and operation of the first mobile communication network will be described as follows:

The ANTS 240a to 240m are connected via lines to the ANC 240 to execute treatment and authentication of data transmitted/received to/from the AT 100 and signal treatment related to the data treatment and authentication. In the following description, the ANTS and ANC will be referred to in common as an Access Network (AN). The ANC 240 is connected to a PDSN 400, which is connected to the Internet for packet data communication. Although not shown in Fig. 1B, a General ATM switch Network (GAN), which is connected to a leading terminal of the PDSN, controls and processes packet data transmitted/received to/from the AT. The PDSN 400 is connected to a gatekeeper 500, which functions a visual communication server executing authentication to packet data service of the AT 100. The gatekeeper 500 includes a database for multimedia subscriber registration (telephone number) and Internet protocol allocation

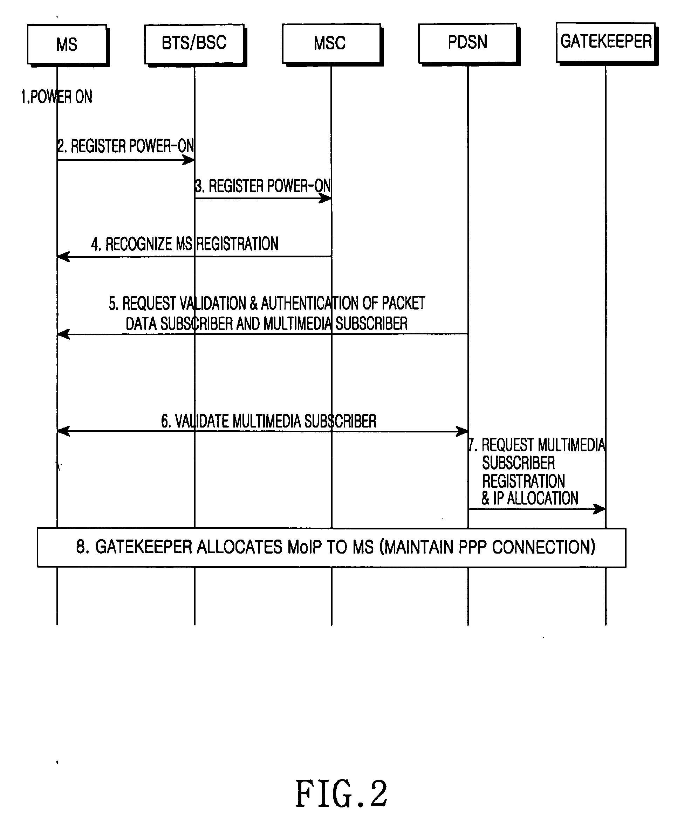

Fig. 2 is a flowchart illustrating a registration process for a multimedia subscriber performed by a mobile station according to an embodiment of the invention.

When a user powers on the MS 100 (step 1), the MS 100 registers power-on in the BTS/BSC 200 (step 2). The BTS/BSC 200 registers power-on in the MSC 300 (step 3). The MSC 300 recognizes registration of the MS 100 (step 4). At completion of the validation of the multimedia subscriber between the PDSN 400 and the MS 100 (steps 5, 6), the PDSN 400 requests the gatekeeper 500 for registration of the multimedia subscriber and IP allocation (step 7). Then, the gatekeeper 500 allocates a Multimedia over IP (MoIP) to the MS 100 and maintains PPP connection (step 7).

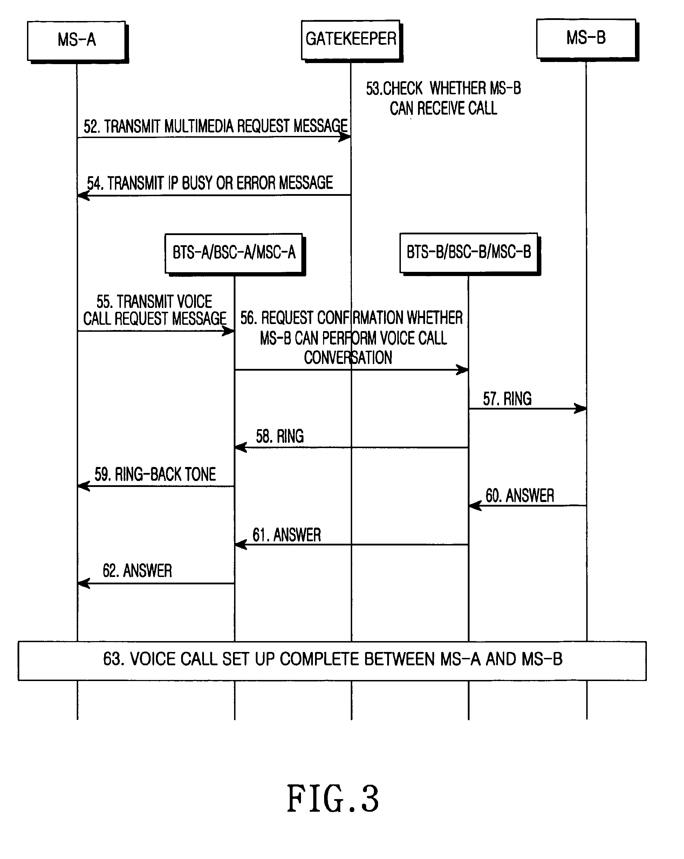

Fig. 3 is a flowchart illustrating a process of originating multimedia and voice calls according to a preferred embodiment of the invention.

An MS-A transmits a multimedia request message to the gatekeeper in step 52. A telephone number and a multimedia command are inputted to transmit the multimedia request message. The gatekeeper analyzes the multimedia request message from the MS-A, and determines whether the MS-B can receive a multimedia call in 53. If the MS-B cannot receive the multimedia call, the gatekeeper transmits an IP busy message (e.g., owing to multimedia conversation or data communication) or an error message into the MS-A in step 54. The error message may be a message informing that an MS-B has not made any answer or that the call has failed owing to malfunction of a network or equipment. Otherwise, even though it is not indicated, it is possible that the gatekeeper has not transmitted the answer according to a reason similar to the above.

At failure of the multimedia call as above (step 54), the MS-A transmits a voice call request message into a base station BTS-A/BSC-A/MSC-A in step 55 (hereinafter the MSC to which the BTS/BSC and the BTS/BSC are connected will be commonly designated as base station and operational processes between the BTS/BSC and the MSC will be omitted for the sake of convenience). The voice call request message contains a telephone number of the MS-B. In step 56, the BTS-A/BSC-A/MSC-A requests whether the MS-B can perform voice conversation via a base station BTS-B/BSC-B/MSC-B where the MS-B is located. The BTS-B/BSC-B/MSC-B transmits a ring to the MS-B in step 57, and to the BTS-A/BSC-A/MSC-A in step 58. The BTS-A/BSC-A/MSC-A transmits a ring-back tone to the MS-A in step 59. If the MS-B transmits an answer signal into the BTS-B/BSC-B/MSC-B in step 60, the BTS-B/BSC-B/MSC-B also transmits the answer signal into the MS-A in step 62.

Then voice call set up is completed between the MS-A and the MS-B in step 63.

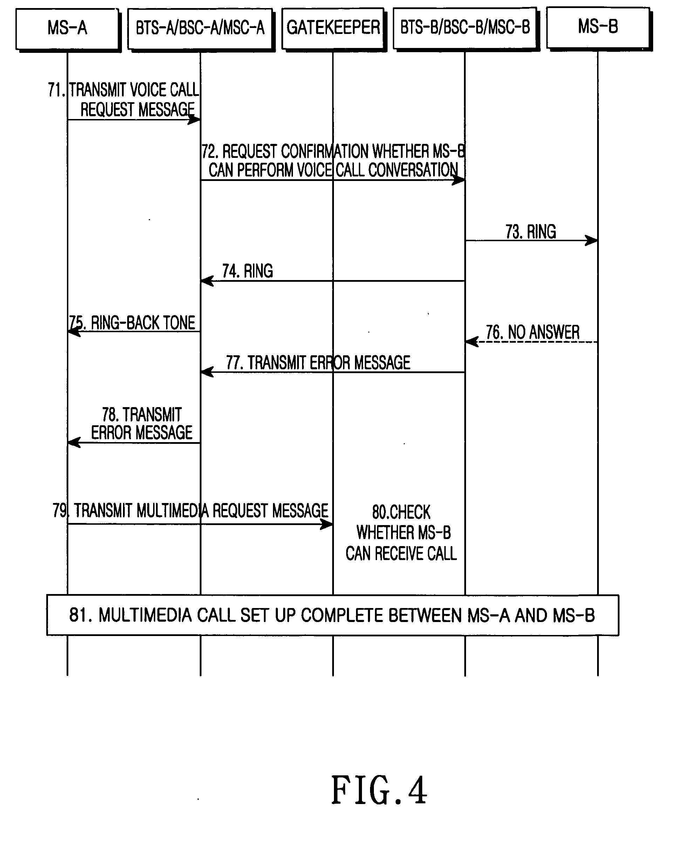

Fig. 4 is a flowchart illustrating a process of originating multimedia and voice calls according to an alternative embodiment of the invention.

The MS-A transmits a voice call request message into the base station BTS-A/BSC-A/MSC-A of the MS-A in step 71. The voice call request message contains a telephone number of the MS-B. The BTS-A/BSC-A/MSC-A requests confirmation of whether the MS-B can perform voice conversation via the BTS-B/BSC-B/MSC-B of the MS-B in step 72. The BTS-B/BSC-B/MSC-B transmits a ring to the MS-B in step 73, and to the BTS-A/BSC-A/MSC-A in step 74. The BTS-A/BSC-A/MSC-A transmits a ring-back tone to the MS-A in step 75. If the MS-B does not transmit an answer into the BTS-B/BSC-B/MSC-B in step 76, the BTS-B/BSC-B/MSC-B transmits an error message into the BTS-A/BSC-A/MSC-A in step 77. Then the BTS-A/BSC-A/MSC-A also transmits an error message to the MS-A in step 78. According to the above-illustrated example, the error message means a message informing that the MS-B has not made any message. In addition, the error message may inform that the call has failed owing to a malfunction of the network or equipment or a voice-mail related to voice call function is executed.

At failure of the voice call as above, the MS-A transmits a multimedia request message into the gatekeeper in step 79. The MS-A automatically creates the multimedia request message including the receiver's telephone number. The multimedia request message is created by inputting the telephone number. The gatekeeper analyzes the multimedia request message from the MS-A, and determines whether the MS-B can receive a call in step 80. If it is determined that the MS-B can receive the call, multimedia call set up is completed between the MS-A and the MS-B in step 81.

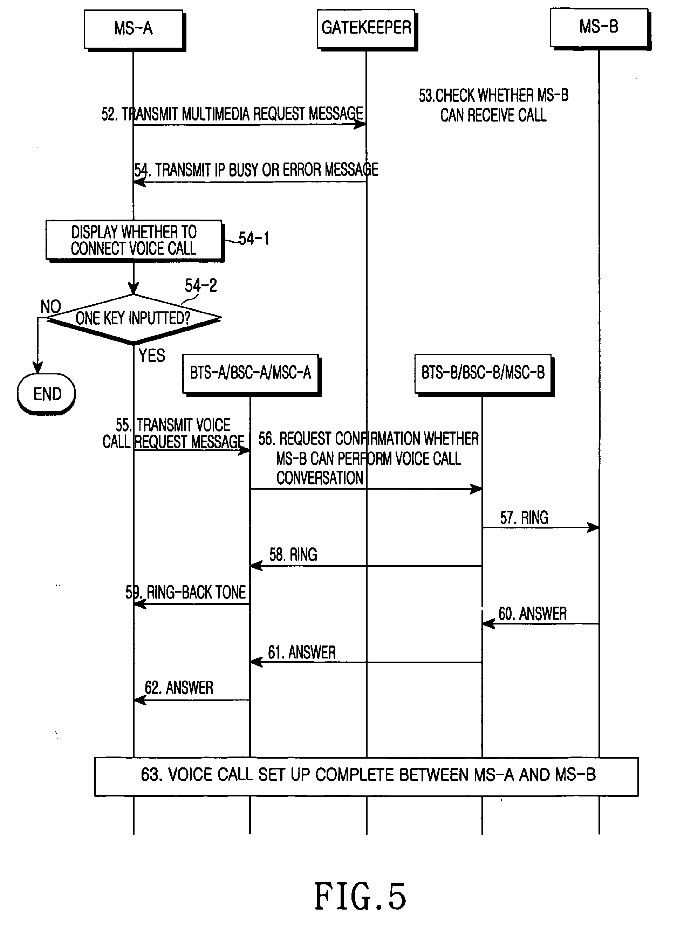

Fig. 5 is a flowchart illustrating a process of originating multimedia and voice calls according to another alternative embodiment of the invention.

The process of this embodiment manually performs call re-origination, unlike the above preferred embodiment (shown in Fig. 3) which automatically re-originates another call. That is, the MS-A displays a message for questioning whether a user wants voice call connection or not, and thus the user can recognize circumstances from the displayed message and thus input a key requesting connection in steps 54-1 and 54-2. The key for requesting re-connection is a single key which is predesignated to allow the user to express that he/she wants to re-connect another call.

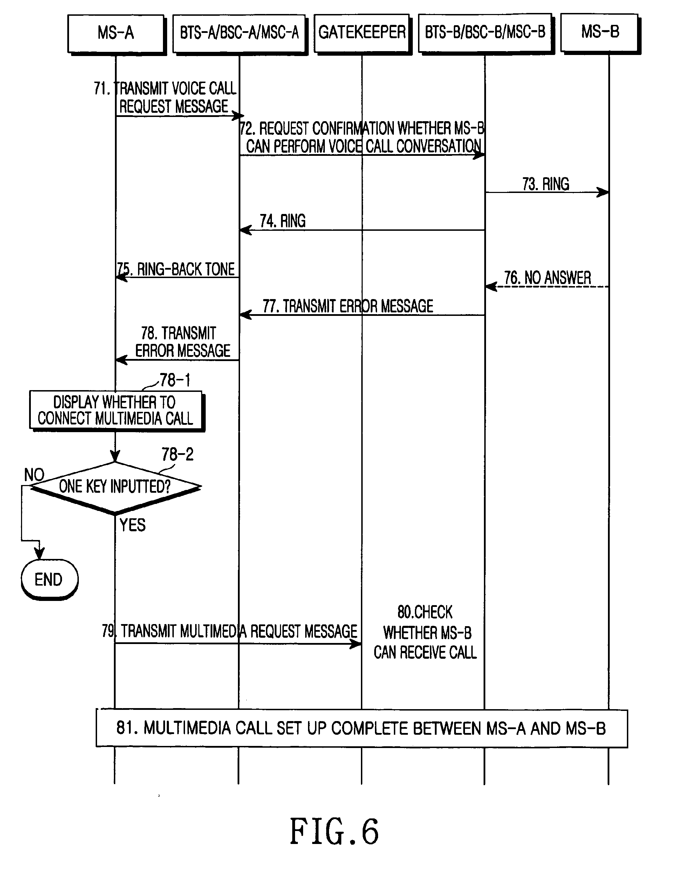

Fig. 6 is a flowchart illustrating a process of originating multimedia and voice calls according to yet another alternative embodiment of the invention.

The process of this embodiment manually performs call re-origination, unlike the above preferred embodiment (shown in Fig. 4) which automatically re-originates another call. That is, the MS-A displays a message for questioning whether a user wants multimedia call re-connection or not, and thus the user can recognize circumstances from the displayed message and thus input a key requesting re-connection in steps 78-1 and 78-2.

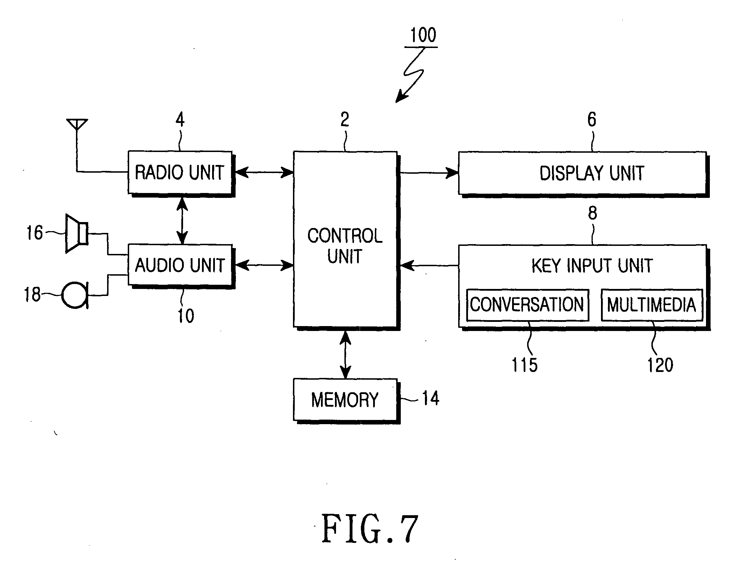

Fig. 7 illustrates a structure of a mobile station including a keypad according to an embodiment of the invention.

A control unit 2 generally controls the operation of the MS 100. Upon detection of call failure, the control unit 2 automatically executes call change or changes a multimedia call to a voice call and vice versa so that a changed call can be originated. A radio unit 4 controls radio transmission/receiving of voice and control data. An audio unit 10 coverts received voice data into an audible sound and outputs the converted audible sound via a speaker 16. The audio unit 10 also converts voice inputted via a microphone 18 into data, compresses and/or recognizes the voice data. A memory 14 includes a Read Only Memory (ROM), a Random Only Memory (RAM) and an audio memory for storing a number of programs and data necessary for the control unit 2 to control the MS 100. The memory 14 stores a program, at failure of a first call, enabling automatic call change (from the multimedia call to the voice call and vice versa) and data which may be created in execution of the program. That is, the control unit 2 controls the MS 100 to execute an automatic setting mode for automatic connection of a different type of call or second call according to a result of the call setting mode determination at failure of the first call. In a more preferred embodiment, the memory 14 may further store a program and its related data, at failure of the first call, for enabling a manual setting mode for connecting the second call through request and answer with the user. The control unit 2 also controls the manual setting mode to be executed according to the result of the call setting mode determination of the MS at failure of the call. In execution of the manual setting mode, the MS outputs a message requesting the user whether he/she wants to try the second type of call which was not attempted previously. A user interface unit is provided for enabling the user to answer the request message. The user interface unit includes a key input unit, a display unit, a speaker, a microphone and so on. The key input unit 8 has a conversation key 115, a multimedia key 120 and a number of input keys (not shown) for various functions, numbers or letters. The key input unit 8 outputs key input data corresponding to a key pressed by the user. The display unit 6 may comprise a Liquid Crystal Display (LCD) and so on, and outputs various display data generated by the MS 100. Further, the display unit 6 displays a message for requesting the user whether he/she wants to try the second call which was not attempted. The key input unit 8 further includes answering means enabling the user to answer the request message which requests the user whether the user wants to attempt the second which was not attempted. Although not shown in Fig. 7, the answering means is a one key in the key input unit 8. The user input operation can be variously executed via a voice recognition function of the audio unit 10, or the key input unit 8 or a touch pad (not shown).

In attempting a common call, a telephone number is inputted by pressing number keys and then a conversation key 115 is pressed to transmit a signal. In originating a multimedia call, a multimedia key 120, number keys corresponding to the telephone number and the conversation key 115 are pressed to transmit a signal. That is, in trial of the multimedia call, a separate multimedia key 120 is pressed to differentiate the multimedia call attempt from the common call attempt.

According to the present invention as set forth above, when multimedia set up is not established, a mobile station also supporting a voice call function can automatically request the voice call thereby automatically connecting the call. Otherwise, when general call set up is not established, a mobile station also supporting a multimedia call function can automatically try multimedia call connection. Further, at failure of multimedia or voice call connection, where a mobile station supports both multimedia and voice call functions, the mobile station can automatically originate a multimedia or voice call again requesting call connection. Therefore, a user can use the mobile station more conveniently. Furthermore, a keypad comprises a multimedia-dedicated key allowing key application for multimedia call separate from voice call. That is, convenience of key input is enhanced since it is not necessary for the user to memorize a complicated key combination which is made for discrimination from voice call input.

While this invention has been described in connection with the preferred embodiments in the specification of the invention, it is also understood that various modifications and variations can be made without departing from the scope of the invention, which is not restricted to the above described embodiments but shall be defined by the appended claims and equivalents thereof.

## Claims

1. A multimedia or voice call originating method in a mobile station, the method comprising the steps of:
(a) attempting to originate one of a multimedia call and a voice call as selected by a user;
(b) determining whether call origination has succeeded in step (a); and
(c) if failure is determined in step (b), automatically attempting to originate the other one of the multimedia call and the voice call, which was not attempted in step (a).

2. A multimedia or voice call originating method in a mobile station, the method comprising the steps of:
(a) attempting to originate one of a multimedia call and a voice call selected by a user;
(b) determining whether call origination has succeeded in step (a);
(c) if failure is determined in step (b), questioning the user whether the user wants to originate the other one of the multimedia call and the voice call, which option was not attempted in step (a); and
(d) upon detecting an answer inputted from the user requesting to originate the other call which was not attempted in step (a), attempting to originate the other one of the multimedia call and the voice call, which option was not attempted in step (a).

3. A multimedia or voice call originating method in a mobile station in accordance with claim 2, wherein the answer is inputted via a single key in step (d).

4. A multimedia or voice call originating method in a mobile station, the method comprising the steps of:
(a) transmitting, by a first mobile station, a multimedia request message into a visual communication control server to originate a multimedia call to a second mobile station;
(b) determining, by the visual communication control server, the state of the second mobile station; and
(c) if it is determined in step (b) that the second mobile station has failed to answer the multimedia call, automatically originating a voice call to the second mobile station.

5. A multimedia or voice call originating method in a mobile station in accordance with claim 4, wherein step (c) comprises:
transmitting, by the first mobile station, a voice call request message to a base station of the first mobile station;
requesting via a base station of the second mobile station whether the second mobile station can perform voice conversation;
transmitting, by the base station of the second mobile station, a calling tone to the second mobile station and the base station of the first mobile station, respectively;
transmitting, by the base station of the first mobile station, a ring-back tone to the first mobile station; and
transmitting, by the second mobile station, an answer to the base station of the second mobile station, by the base station of the second mobile station, an answer to the base station of the first mobile station, and by the base station of the first mobile station,

6. A multimedia or voice call originating method in a mobile station in accordance with claim 5, wherein the voice call request message contains a telephone number of the second mobile station.

7. A multimedia or voice call originating method in a mobile station, the method comprising the steps of:
(a) transmitting, by a first mobile station, a voice call request message to a base station of the first station requesting voice conversation with a second mobile station;
(b) requesting, by the base station of the first station, a base station of the second mobile station whether the second mobile station can perform voice conversation (c) transmitting by the base station of the second mobile station a calling tone to the second mobile station and the base station of the first mobile station, respectively;
(d) transmitting from the base station of the first mobile station a ring-back tone to the first mobile station; and
(e) if the second mobile station does not answer, automatically trying to originate a multimedia call to the second mobile station.

8. A multimedia or voice call originating method in a mobile station in accordance with claim 7, wherein step (e) comprises:
transmitting, by the first mobile station, a multimedia call request message to a visual communication control server in order to originate a multimedia call to a second mobile station;
determining, by the visual communication control server, the state of the second mobile station; and
if it is determined that the second mobile station can receive the call in the examination step, completing multimedia call set up between the first and second mobile stations.

9. A multimedia or voice call originating method in a mobile station in accordance with claim 8, wherein the multimedia call request message contains a telephone number of the second mobile station and a code identifying a dynamic image.

10. A mobile station comprising:
a user interface unit for enabling a user to selectively attempt one of a multimedia call and a voice call; and
a control unit for controlling a first call selected by the user to be executed, determining whether the first call selected by the user has succeeded or failed, and upon determining a failure of the first call, controlling a second call, which was not attempted previously, to be selected and attempted.

11. A mobile station in accordance with claim 10, further comprising a memory for storing a program and its related data which enable an automatic setting mode to be executed for automatic connection of the second call at failure of the first call, wherein the control unit controls the automatic setting mode to be executed according to a result of a call setting mode determination in the mobile station at failure of the first call.

12. A mobile station in accordance with claim 11, wherein the memory further stores a program and its related data which enable the automatic setting mode to be executed for connection of the second call according to request and answer messages with the user at failure of the first call, andwherein the control unit controls a manual setting mode to be executed according to a result of call setting mode determination in the mobile station at failure of the first call,
the mobile station, further comprising a user interface unit for creating a message requesting whether the user wants the second call to be attempted at execution of the manual mode and for enabling the user to answer the request message.

13. A mobile station in accordance with claim 12, wherein the user interface unit includes one key for receiving the answer from the user via one key input.

14. A mobile communication system having a mobile station for supporting multimedia and voice conversation, comprising:
a visual communication control server for executing multimedia subscriber registration and Internet protocol allocation at power-on registration of the mobile station in response to a multimedia call origination request from the mobile station, determining whether a called mobile station can execute conversation, and connecting a multimedia call or informing failure of the multimedia call to the mobile station; and
a base station for determining whether the called mobile station can execute voice conversation in response to a voice call origination request from the mobile station, and informing a result of the determination to the mobile station,
whereby upon detection of a failure of a multimedia call, after the mobile station requests multimedia call origination from the visual communication control server, a voice call is originated, and upon detection of a failure of a voice call, after the mobile station requests voice call origination from the visual communication control server, a multimedia call is originated.

15. A mobile communication system in accordance with claim 14, wherein the multimedia call request is executed by transmitting a message including the telephone number of the called mobile station and a code identifying the multimedia call.

16. A mobile communication system in accordance with claim 14, wherein the mobile station, at failure of the voice/multimedia call, automatically executes either of the multimedia and voice call origination requests without operation of the user.

17. A mobile communication system in accordance with claim 14, wherein the mobile station, at failure of the voice/multimedia call, executes either of the multimedia and voice call origination requests via one key input of the user.
